# EUROPEAN PATENT SPECIFICATION

(11) **EP 4 354 853 B1**
(45) Date of publication and mention of the grant of the patent: **25.02.2026**
(21) Application number: 22925070.9
(22) Date of filing: 24.06.2022
(51) Int. Cl.: G01J 5/00, G01J 5/07, H04N 7/18, H04N 23/60, G06T 7/13

(54) **THERMAL-IMAGE-MONITORING SYSTEM USING PLURALITY OF CAMERAS**
WÄRMEBILDÜBERWACHUNGSSYSTEM MIT MEHREREN KAMERAS
SYSTÈME DE SURVEILLANCE PAR IMAGES THERMIQUES UTILISANT UNE PLURALITÉ DE CAMÉRAS

(30) Priority: 04.02.2022 KR 20220014637
(43) Date of publication of application: 17.04.2024
(73) Proprietor: Worldcns, Inc., Gwangmyeong-si, Gyeonggi-do 14348 (KR)
(72) Inventor: JO, Sung Hyun, Gwangmyeong-si, Gyeonggi-do 14348 (KR)
(74) Representative: Danubia Patent & Law Office LLC
(86) International application number: PCT/KR2022/009021
(87) International publication number: WO 2023/149603

(56) References cited:
- EP-A2- 2 533 534
- GB-A- 2 492 689
- KR-A- 20100 138 202
- KR-A- 20100 138 202
- KR-B1- 101 002 066
- KR-B1- 101 821 159
- KR-B1- 102 129 734
- KR-B1- 102 212 773
- KR-B1- 102 411 612

## Description

### [Technical Field]

The present disclosure relates to a thermal-image monitoring system using a plurality of cameras, and more particularly, to a monitoring system that performs tracking target determination and tracking monitoring by using an optical camera, a speed dome camera, and a thermal imaging camera.

### [Background Art]

Recently, the installation of a closed-circuit television (CCTV) is increased by various purposes, and a CCTV having various functions is being developed according to various purposes as well as simply increasing the number of CCTVs.

Among the various purposes of the CCTV, a main purpose is to monitor a specific area or a specific object. Recently, the CCTV is used to determine an object caught in an infectious disease when considering an environment according to an infectious disease and further, is widely used to track a moving path of the object. From GB 2 492 689 A a method for monitoring a thermal-image of a moving object is known.

However, the current CCTV or monitoring system generally captures a fixed area, and thus does not accurately determine the moving direction of the moving object in an environment such as the intersection or the like. It is difficult for a CCTV or monitoring system for tracking an object to check whether a specific moving object is infected with an infectious disease, and thus, the CCTV or monitoring system tracks and photographs all moving object to cause a waste of resources.

### [Disclosure]

### [Technical Problem]

A purpose of the present disclosure in order to solve the above problem is to provide a thermal-image monitoring system using a plurality of cameras.

Another purpose of the present disclosure in order to solve the above problem is to provide a method for operating a thermal-image monitoring system using a plurality of cameras.

Still another purpose of the present disclosure in order to solve the above problem is to provide a thermal-image monitoring apparatus using a plurality of cameras.

The purpose to be achieved by the present application is not limited to the above-described purpose. Those of ordinary skill in the art to which the present application belongs may apricate purposes not mentioned from the present discourse and the accompanying drawings.

### [Technical Solution]

A method according to claim 1 for monitoring a thermal-image of a moving object according to one embodiment of the present disclosure in order to achieve the above purpose is performed by an electronic device having at least one optical camera, a speed dome camera, and a thermal imaging camera, and may include acquiring first image information from the at least one optical camera; deriving a moving body in the first image information; generating position information of the moving object based on the information about the moving object; controlling movement of the speed dome camera so that the speed dome camera faces the moving object based on the position information of the moving object; acquiring second image information about the moving object from the speed dome camera; acquiring thermal-image information about the moving object from the thermal-image camera mounted on one side of the speed dome camera; acquiring improved thermal-image information based on the thermal-image information and the second image information; acquiring a temperature of the moving object based on the improved thermal-image information; and determining whether the speed dome camera is to track and image the moving object based on the temperature of the moving object.

In this regard, the acquiring of the improved thermal-image information based on the thermal-image information and the second image information may include: generating contour image information of the moving object using edge detection from the second image information; and acquiring the improved thermal-image information based on the thermal-image information and the contour image information.

In this regard, the determining of whether the speed dome camera is to track and image the moving object based on the temperature of the moving object may include: determining a threshold temperature based on a pre-trained environment-based threshold temperature determination model, and environment information about an area corresponding to the first image information; and determining whether the speed dome camera is to track and image the moving object, based on the threshold temperature and the temperature of the moving body.

In this regard, wherein the first image information may indicate image information obtained by imaging a preset road area, wherein a second image information may indicate image information obtained by imaging a partial area of the preset road area, wherein the second image information may have a higher magnification than a magnification of the first image information.

In this regard, the electronic device may include: a first electronic device on which the at least one optical camera is mounted; and a second electronic device on which the speed dome camera and the thermal imaging camera are mounted, wherein the first electronic device may be fixed, wherein movement of the second electronic device may be controlled based on the position information of the moving object.

An electronic device according to one embodiment of the present disclosure in order to achieve the above purpose may include at least one optical camera, a speed dome camera, a thermal imaging camera, at least one processor, and a memory storing therein at least one instruction executed by the at least one processor, wherein the at least one instruction may be executed to acquire first image information from the at least one optical camera, to derive a moving object in the first image information, to control movement of the speed dome camera so that the speed dome camera faces the moving object based on the position information of the moving body, to acquire second image information about the moving object from the speed dome camera, to acquire thermal-image information about the moving object from the thermal imaging camera mounted on one side of the speed dome camera, to acquire improved thermal-image information based on the thermal-image information and the second image information, to acquire a temperature of the moving object based on the improved thermal-image information, and to determine whether the speed dome camera is to track and image the moving object based on the temperature of the moving object.

In this regard, the at least one instruction may be executed to generate contour image information of the moving object using edge detection from the second image information; and obtain the improved thermal-image information based on the thermal-image information and the contour image information.

In this regard, the at least one instruction may be executed to determine a threshold temperature based on a pre-trained environment-based threshold temperature determination model, and environment information about an area corresponding to the first image information; and determine whether the speed dome camera is to track and image the moving object, based on the threshold temperature and the temperature of the moving body.

In this regard, the first image information may indicate image information obtained by imaging a preset road area, wherein a second image information may indicate image information obtained by imaging a partial area of the preset road area, wherein the second image information may have a higher magnification than a magnification of the first image information.

In this regard, the electronic device may include: a first electronic device on which the at least one optical camera is mounted; and a second electronic device on which the speed dome camera and the thermal imaging camera are mounted, wherein the first electronic device may be fixed, wherein movement of the second electronic device may be controlled based on the position information of the moving object.

The solutions are not limited to the above-described solutions, and the solutions not mentioned may be clearly understood by one of ordinary skill in the art to which the present application belongs from the specification and the accompanying drawings.

### [Technical Effect]

According to the present disclosure, the surveillance system in which the plurality of optical cameras is arranged so as to be spaced from each other in a circumferential direction, and an imaging area of a central optical camera or a fisheye camera and imaging areas of the remaining optical cameras overlap each other to minimize a blind spot may be provided.

According to the present disclosure, an efficient monitoring system may be provided in which whether the speed dome camera is to track and image a target in a monitoring target area is determined through the thermal imaging camera, and based on the positive determination result, the speed dome camera tracks and images only a specific object, such that the object other than the specific object is monitored based on a relative low magnification image through the optical camera, and only the specific object is monitored based on a relative high magnification image through the speed dome camera, thereby performing differential monitoring on the objects.

According to various embodiments, the effects are not limited to the above-described effects, and the effects that are not mentioned may be clearly understood by a person skilled in the art to which the present application belongs from the present specification and the accompanying drawings.

### [Brief Description of Drawings]

FIG. 1 is a block configuration diagram of a thermal-image monitoring apparatus using a plurality of cameras according to an embodiment of the present disclosure.
FIG. 2 is a view illustrating an appearance of a thermal-image monitoring apparatus using a plurality of cameras according to an embodiment of the present disclosure.
FIG. 3 is a block configuration diagram of a control module of a thermal-image monitoring apparatus using a plurality of cameras according to an embodiment of the present disclosure.
FIG. 4 is a diagram illustrating a state in which a thermal-image monitoring system using a plurality of cameras according to an embodiment of the present disclosure is applied to an intersection.
FIG. 5 is a diagram illustrating a method for operating a thermal-image monitoring system using a plurality of cameras according to an embodiment of the present disclosure.
FIG. 6 is a diagram illustrating a method for deriving an improved thermal-image based on a visible light image and a thermal-image corresponding to an embodiment of the present disclosure.

### [Best Mode]

The present disclosure may have various modifications and may have various embodiments, and specific embodiments are illustrated in the drawings and will be described in detail in the detailed description. However, this is not intended to limit the present disclosure to a specific embodiment, and it should be understood that the present disclosure includes all changes, equivalents, and replacements included in the technical scope of the present invention as defined by the appended claims. While describing the drawings, similar reference numerals are used for similar components.

Terms such as first, second, A, B, etc. may be used to describe various components, but the components should not be limited by the terms. The terms are used only for the purpose of distinguishing one component from another component. For example, a first element could be termed a second element, and, similarly, a second element could be termed a first element, without departing from the scope of the present disclosure. The term "and/or" includes a combination of a plurality of related listed items or any one of a plurality of related listed items.

When a first component is described as being "connected" or "coupled" to a second component, it should be understood that the first component may be connected or coupled directly to the second component, but there may be a third component "connected" or "coupled" between the components. On the contrary, when a component is referred to as being "directly coupled to" or "directly connected to" another component, it should be understood that there is no other component therebetween.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred embodiments of the present disclosure will be described in more detail with reference to the accompanying drawings. In the following description of the present disclosure, in order to facilitate overall understanding, the same reference numerals are used for the same elements in the drawings, and repeated descriptions of the same elements will be omitted.

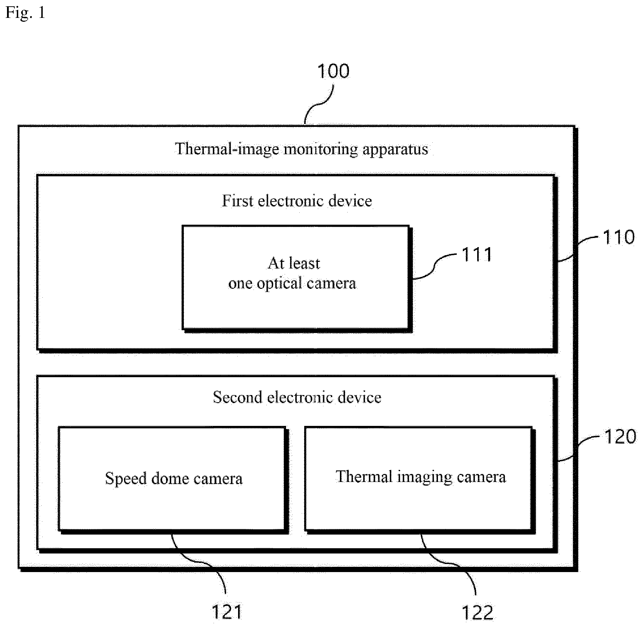

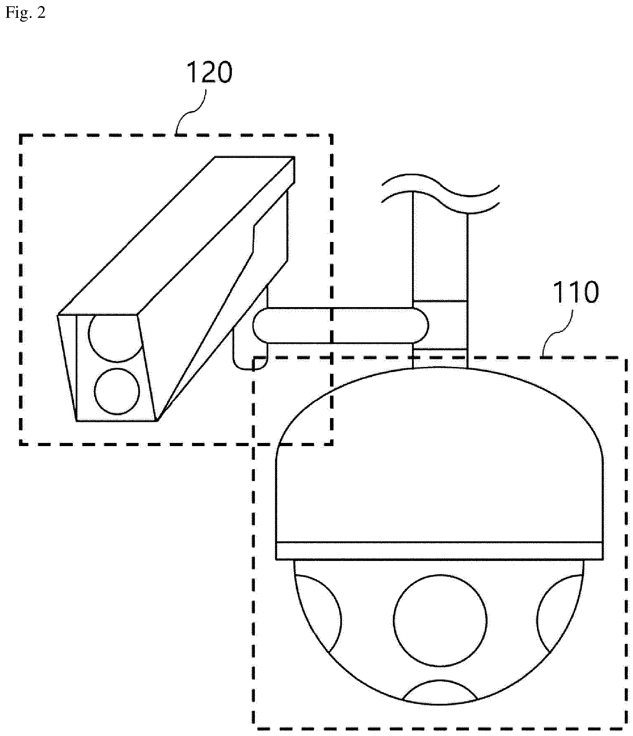

FIG. 1 is a block configuration diagram of a thermal-image monitoring apparatus using a plurality of cameras according to an embodiment of the present disclosure, and FIG. 2 is a view illustrating an appearance of a thermal-image monitoring apparatus using a plurality of cameras according to an embodiment of the present disclosure.

Referring to FIGS. 1 and 2, a thermal-image monitoring apparatus 100 using a plurality of cameras may include a first electronic device 110 and a second electronic device 120. In this regard, the first electronic device 110 may be fixed to continuously photograph the same area, and the second electronic device 120 may move a photographing target area through rotation and/or angle adjustment, thereby tracking a specific object. The thermal-image monitoring apparatus 100 according to the method according to one embodiment may be installed fixedly installed at an end of a pole extending from the ground into the air of the monitoring target area.

For example, the first electronic device 110 may include at least one optical camera 111. In this regard, the at least one optical camera 111 may include five optical cameras, but the number of optical cameras used may vary based on the viewing angle of the optical lens. In addition, the at least one optical camera 111 may include one fisheye camera (a camera using a fisheye lens) and four optical cameras, but the number of optical cameras used may vary based on the viewing angle of the fisheye lens or the optical lens. However, embodiments of the present disclosure are not limited thereto. However, when one fisheye camera is included, the fisheye camera may be used as a central camera that captures a central area, and remaining optical cameras may be used as outer cameras that capture an outer area (e.g. an area corresponding to each orientation).

For example, the plurality of optical cameras may be positioned adjacent to the vicinity of the fisheye camera, while a lens of each optical camera is oriented radially outwardly about the fisheye camera. That is, each optical camera may target an area around the fisheye camera in the entire area of the monitoring target area to acquire an optical image in an corresponding orientation. The optical cameras may be arranged so as to be spaced from each other in a circumferential direction around the fisheye camera to obtain the optical images in a plurality of orientations of the surveillance zone, respectively. For example, in one embodiment, four optical cameras may be arranged so as to be spaced from each other by a 90 degrees angular spacing in a circumferential direction around the fisheye camera. The lens of each optical camera is oriented along a central axis of the camera. That is, each optical camera may be oriented to face outwardly of a center of an image obtained from the fisheye camera and in a direction toward a position at which appearance of the moving object is expected.

The second electronic device 120 may include a speed dome camera 121 and a thermal imaging camera 122. In this regard, the speed dome camera 121 which is a type of PTZ camera may image the moving object entering the monitoring target area while continuously following the moving object entering the monitoring target area. Through the speed dome camera, the position movement of the moving object may be checked in each fixed image, and the moving path of the moving object may be identified based on a moving image in which the position movement of the moving object is tracked via the panning or tilting operation of the speed dome camera.

The thermal imaging camera 122 may be mounted on the speed dome camera 121 to perform panning or tilting operation together with the speed dome camera 121 to obtain a thermal-image moving image in which the movement of the moving object is tracked. Since the second electronic device 120 of FIG. 2 to which the speed dome camera 121 and the thermal imaging camera 122 are coupled is an example, the scope of the present disclosure is not limited to the view of FIG. 2.

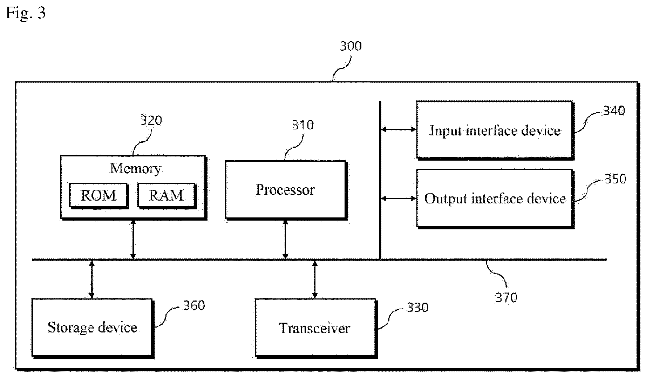

FIG. 3 is a block configuration diagram of a control module of a thermal-image monitoring apparatus using a plurality of cameras according to an embodiment of the present disclosure.

Referring to FIG. 3, a control module 300 of the thermal-image monitoring apparatus according to an embodiment of the present disclosure may include at least one processor 310 and a memory 320, and may further include at least one of a transceiver 330, an input interface device 340, an output interface device 350, and a storage device 360. Further, the components included in the control module 300 of the thermal-image monitoring apparatus may be connected to each other via a bus 370 to communicate with each other. For example, the control module 300 of the thermal-image monitoring apparatus may be referred to as a control device, some of the above-described components may be excluded, and other components may be added.

For example, the at least one processor 310 may refer to a central processing unit (CPU), a graphics processing unit (GPU), or a dedicated processor in which methods according to embodiments of the present disclosure are performed. Each of the memory 320 and the storage device 360 may include at least one of a volatile storage medium and a nonvolatile storage medium. For example, the memory 320 may be one of a read only memory (ROM) and a random access memory (RAM), and the storage device 360 may be a flash memory, a hard disk drive (HDD), a solid state drive (SSD), or various memory cards (e.g. a micro SD card).

For example, the memory 320 or the storage device 360 may store at least one command that may be executed by the at least one processor 310. For example, the at least one command may include a command for acquiring first image information from the at least one optical camera, a command for deriving a moving object in the first image information, a command for generating position information of the moving object based on the information about the moving object, a command for controlling the movement of the speed dome camera so that the speed dome camera faces the moving object, based on the position information of the moving object, a command for acquiring second image information about the moving object from the speed dome camera, a command for acquiring thermal-image information about the moving object from the thermal imaging camera mounted on one side of the speed dome camera, a command for acquiring improved thermal-image information based on the thermal-image information and the second image information, a command for acquiring a temperature of the moving object based on the improved thermal-image information, and a command for determining whether the speed dome camera is to track and image the moving object based on the temperature of the moving object.

For example, the command for acquiring the improved thermal-image information based on the thermal-image information and the second image information may include a command for generating contour image information of the moving object through edge detection from the second image information, and a command for acquiring the improved thermal-image information based on the thermal-image information and the contour image information.

For example, the command for determining whether the speed dome camera is to track and image the moving object based on the temperature of the moving object may include a command for determining a threshold temperature based on a pre-trained environment-based threshold temperature determination model and environment information about an area corresponding to the first image information, and a command for determining whether the speed dome camera is to track and image the moving object based on the threshold temperature and the temperature of the moving body.

For example, the first image information may indicate image information obtained by imaging a preset road area, the second image information may indicate image information obtained by imaging a partial area of the preset road area, and the second image information may have a higher magnification than that of the first image information.

For example, the first electronic device 110 equipped with the at least one optical camera may be fixed, and the movement of the second electronic device 120 including the speed dome camera and the thermal-image camera may be controlled based on the position information of the moving object.

The control module 300 of the thermal-image monitoring apparatus according to the method according to one embodiment may be included in the thermal-image monitoring apparatus 100 and may be connected to the first electronic device 110 and the second electronic device 120. Alternatively, the control module 300 of the thermal-image monitoring device may be included in the first electronic device 110 and connected to the second electronic device 120, or may be included in the second electronic device 120 and connected to the first electronic device 110. Alternatively, the control module 300 for the thermal-image monitoring apparatus 100 may be located outside the thermal-image monitoring apparatus 100 and connected to the thermal-image monitoring apparatus 100 through wired or wireless communication.

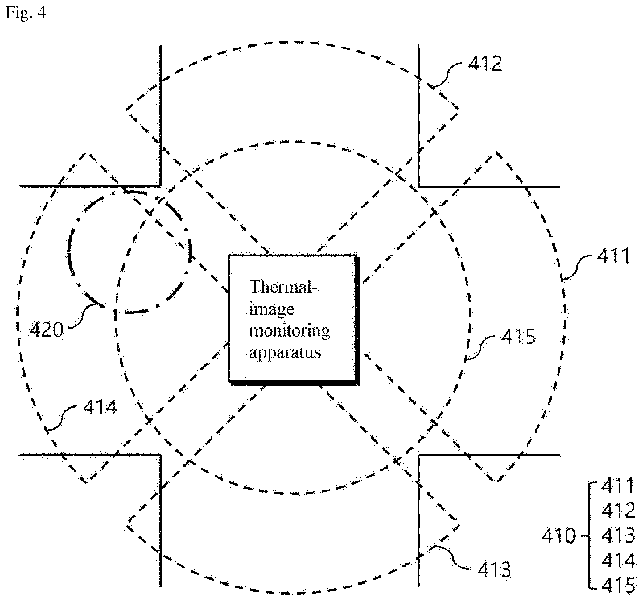

FIG. 4 is a diagram illustrating a state in which a thermal-image monitoring system using a plurality of cameras according to an embodiment of the present disclosure is applied to the intersection.

Referring to FIG. 4, the thermal-image monitoring system according to an embodiment of the present disclosure may acquire first image information 410 through at least one wide-angle camera included in the first electronic device 110, and the first image information 410 in the intersection may include image information 411 on an area corresponding to a first orientation, image information 412 on an area corresponding to a second orientation, image information 413 on an area corresponding to a third orientation, image information 414 on an area corresponding to a fourth orientation, and image information 415 on a central area. For example, when one of a at least one wide-angle camera is replaced with the fisheye camera, the image information 415 on the central area may be fisheye image information obtained through the fisheye lens.

Further, the thermal-image monitoring system according to the method according to one embodiment may obtain image information 420 on a portion of an area included in the first image information 410 through the second electronic device 120. In this regard, since the first image information 410 is acquired by the fixed first electronic device 110, the first image information 410 may be an image obtained by continuously imaging the same area. Since the image information 420 on the portion thereof may be acquired by the second electronic device 120, the image information 420 may be a moving image obtained by imaging the moving object in an area included in the first image information 410 while tracking the moving object. Moreover, the image information 420 on the portion thereof may be image information including a partial area of an area included in the first image information 410, and a partial area not included therein.

In this regard, the image information 420 on the portion obtained through the second electronic device 120 may be the second image information acquired through the speed dome camera 121. The thermal-image information acquired through the thermal imaging camera 122 may be a relatively wide area image including the area corresponding to the second image information, or may be a relatively narrow area image included in the area corresponding to the second image information.

The thermal-image monitoring apparatus 100 according to the method according to one embodiment may be fixedly installed at an end of a pole extending from the ground into the air of the monitoring target area.

Although an example in which a four-way intersection is an imaging target area has been described above for convenience of description, embodiments of the present disclosure are not limited thereto. The number of wide-angle cameras may be changed or may not be changed according to the number of ways of the intersection.

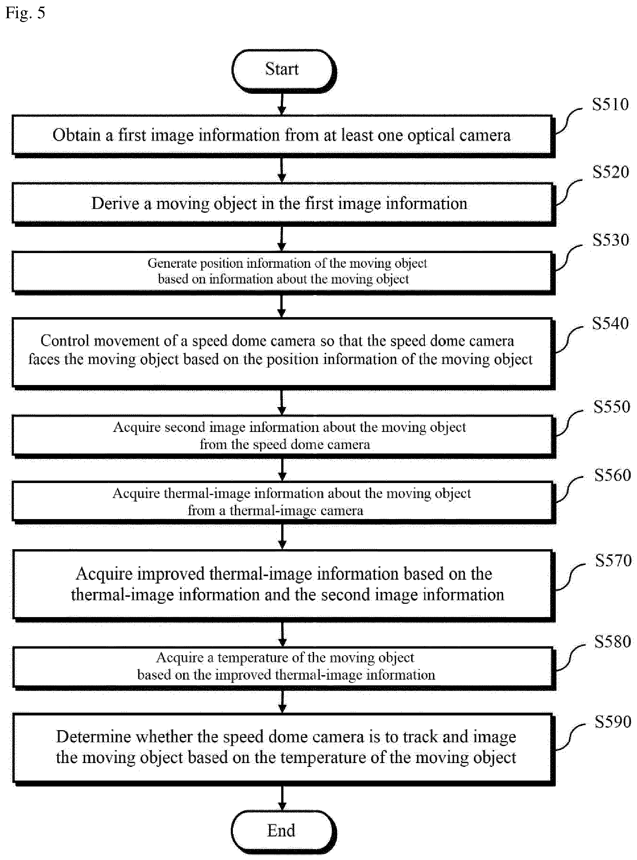

FIG. 5 is a diagram illustrating a method for operating a thermal-image monitoring system using a plurality of cameras according to an embodiment of the present disclosure.

Referring to FIG. 5, in operation S510, the method according to one embodiment may obtain the first image information from at least one optical camera, and in operation S520, the method according to one embodiment may derive the moving object in the first image information. For example, the at least one optical camera may be replaced with a fisheye camera, a camera imaging the central area may be replaced with a fisheye camera, or a camera imaging another area may be replaced with a fisheye camera.

The first image information may indicate image information obtained by imaging the preset road area. The preset road area may be a preset four-way intersection area as shown as in FIG. 4. Alternatively, the first image information may indicate image information obtained by imaging a three or five-way preset intersection area. However, the present disclosure is not limited thereto, and the first image information may be obtained by continuously imaging a fixed area. Accordingly, the first electronic device equipped with at least one optical camera for acquiring the first image information may be fixed.

In addition, in operation S530, the method according to one embodiment may generate the position information of the moving object based on the information about the moving object. In this regard, the method according to one embodiment may detect whether the moving object is present in the image corresponding to the first image information, and may assign an identification code to each of different moving objects sensed in the image.

For example, the method according to one embodiment may use a Gaussian Mixture Model (GMM) technique to identify a moving object in an image. The GMM refers to a scheme of modeling a distribution of data using a plurality of Gaussian probability density functions, and models each pixel in an image using a Gaussian probability density function, and applies an average, a variance, and a weight according to a change of a pixel to adapt a newly input value for each frame to forms a learned background, and separates and detects the moving object via the learning of the background.

In addition, the method according to the method according to one embodiment may extract coordinates of the sensed moving object. When the moving object moves in the image, the position coordinates may be continuously extracted along the moving trajectory. In this regard, the position coordinates may be calculated based on each identification code and at each time.

For example, when one fisheye camera replaces an optical camera for imaging a central area, the method according to one embodiment may calculate the coordinates of the moving object in a form of a two-dimensional polar coordinate in the fisheye image included in the first image information according to a known scheme. In this regard, the polar coordinates of the moving object may be expressed as a distance from an image center point of the moving object and an azimuth angle from a preset reference line. However, even when the optical camera is not replaced with the fisheye camera, the coordinates of the moving object in the image information obtained by imaging the central area may be derived as polar coordinates. Thereafter, the polar coordinates may be converted to the same coordinates as the X-Y plane coordinates in another image (e.g. an optical image) included in the first image information. The plane coordinates of the moving object may be calculated from the optical image. In this case, for image registration between images, a random sample consensus (RANSAC) algorithm may be used, and a homography calculation of an optical image may be performed with a few pairs of registered features. In addition, the coordinates of the moving object may be calculated from the optical image based on a coordinate transformation parameter. Thereafter, the method according to one embodiment may control the movement of the speed dome camera based on the position information including the coordinate information of the moving object.

For example, when one moving object appears in an overlapping area between a plurality of images included in the first image information, the moving object is detected from the plurality of images. In this case, it may be determined whether the moving objects in the plurality of images are identical with each other. In this case, the determination may be made based on a comparing result of the position coordinates of the moving body derived from each of the images and change information (for example, a moving direction) of the position coordinates over time.

For example, the method according to ne embodiment may merge the plurality of images included in the first image information to generate one merged image and may provide the generated one merged image. In this case, the plurality of images may be merged in consideration of the viewing angle of the image information in each orientation based on the image information obtained by imaging the central area. Accordingly, even when an area in which the moving object is detected is changed from one image to another image, a visual effect in which the moving object naturally moves may be provided. Moreover, the method according to one embodiment may generate a two-dimensional map corresponding to the first image information, and may generate and provide an image in which the moving object is displayed and moves within the two-dimensional map over time.

Thereafter, in operation S540, the method according to one embodiment may control the movement of the speed dome camera so that the speed dome camera faces the moving object based on the position information of the moving object. In operation S550, the method according to one embodiment may acquire second image information about the moving object from the speed dome camera, and in operation S560, the method according to one embodiment may acquire the thermal-image information about the moving object from the thermal-image camera mounted on one side of the speed dome camera. For example, the second image information may indicate image information obtained by imaging a partial area of the preset road area, the thermal-image information may be image information obtained by imaging the same area as the area of the second image information. However, the thermal-image information may be image information obtained by imaging a relatively large area including the area of the second image information. The second image information may be image information obtained by imaging a relatively large area including the area of the thermal-image information. This may be changed based on the performance of the speed camera acquiring the second image information and the performance of the thermal imaging camera that acquires the thermal-image information. Thus, the scope of the present disclosure is not limited thereto.

However, since the second image information is image information about a specific target, the second image information may be image information having a higher magnification than that of the first image information in which a wide range is monitored.

In addition, the speed dome camera and the thermal imaging camera may be mounted on one electronic device (e.g., the second electronic device) and may move together under a control command. That is, the motion of the thermal-image camera may be controlled together the motion of the speed dome camera under a motion control command directed to the speed dome camera. In this regard, the motion control command of the speed dome camera may be referred to as a control command of the second electronic device or a motion control command of the thermal-image camera when the speed dome camera and the thermal-image camera move together.

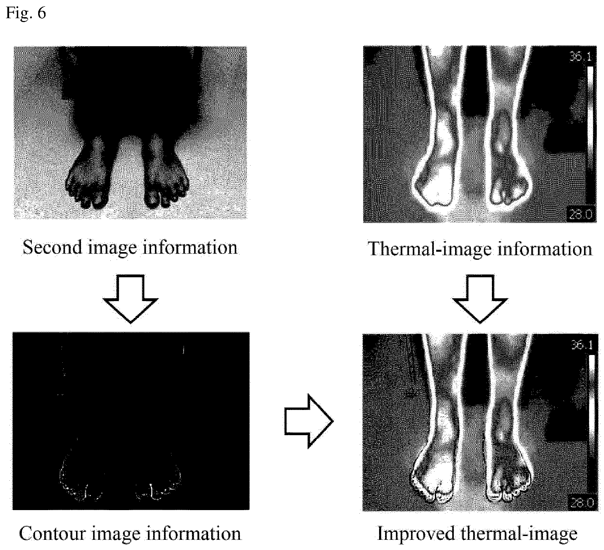

In operation S570, the method according to one embodiment may obtain the improved thermal-image information based on the thermal-image information and the second image information. In operation S580, the method according to one embodiment may acquire the temperature of the moving object based on the improved thermal-image information. For example, the improved thermal-image information may be obtained based on the contour image information of the moving object generated through the edge detection from the second image information, and the thermal-image information acquired through the thermal imaging camera, and a detailed description thereof will be described later with reference to FIG. 6.

In step S590, the method according to one embodiment may determine whether the speed dome camera is to track and image the moving object based on the temperature of the moving object. For example, the method according to one embodiment may determine whether the speed dome camera is to track and image the moving object based on the acquired temperature of the moving object and the threshold temperature determined based on the pre-trained environment-based threshold temperature determination model.

Specifically, the method according to one embodiment may train the environment-based threshold temperature determination model through machine learning based on training data based on environment information. In this regard, the training data may include at least one of time zone information for training, shade absence/presence information for training, wind absence/presence information for training, temperature information for training, humidity information for training, and thermal reflection information by another heat source for training, and threshold temperature information for training. In this regard, the threshold temperature may indicate a temperature at which the object is determined to be infected with an infectious disease. In this case, various neural networks or algorithms such as convolutional neural networks (CNN), artificial neural network (ANN), recurrent neural networks (RNN), and the like may be used for machine learning. However, the present disclosure is not limited thereto, and a common learning neural network or algorithm may be used in various ways.

Thereafter, the method according to one embodiment may obtain the threshold temperature by inputting environmental information about an area corresponding to the first image information to the trained environment-based threshold temperature determination model. The environment information about the area corresponding to the first image information may be obtained from an external server or another sensor located in the corresponding area. However, a scheme of acquiring the environment information is various and thus is not limited to the above description.

Thereafter, when the temperature of the moving object is equal to or higher than the threshold temperature, the method according to one embodiment may determine that the object is a target to be tracked and imaged. In this case, the speed dome camera may continuously track and image the moving object until the moving object is out of the area corresponding to the first image information. Alternatively, when the temperature of the moving object is lower than the threshold temperature, the method according to one embodiment may determine that the object is not the target to be tracked and imaged, and may control the movement of the speed dome camera so that the speed dome camera faces another moving object. For example, the temperature of the moving object may be set based on a temperature of a central portion of a heating area of the moving body, and the central portion may be determined using a method of determining various centers in the various figures. However, the present disclosure is not limited thereto. In addition, the heating area of the moving object may include only an inner area defined by a contour line acquired through the improved thermal-image information to be described later. An area located outside the contour line and emitting the heat may not be included in the heating area of the moving body.

FIG. 6 is a diagram illustrating a method of deriving an improved thermal-image based on a visible light image and a thermal-image corresponding to one embodiment of the present disclosure.

Referring to FIG. 6, the method according to one embodiment may obtain the improved thermal-image information based on the second image information (a visible light image) of the moving object obtained through the speed dome camera and the thermal-image information about the moving object obtained through the thermal imaging camera.

Specifically, the method according to one embodiment may generate the contour image information about the moving object through the edge detection from the second image information. In this regard, the edge detection scheme is configured to derive a point at which the brightness of the image rapidly changes in a digital image, and the detected edge may represent the contour line. For example, the edge detection scheme may use a 3 × 3 Laplacian operator performing a second derivative operation or a prewitt operator performing a first derivative operation However, various other edge detection schemes may be used. Thus, the present disclosure is not limited thereto.

Thereafter, the method according to one embodiment may obtain the improved thermal-image information by differentiating the contour image information and the thermal-image information. In other words, the improved thermal-image information may represent image information obtained by differentiating the contour image information to the thermal-image information, or further may represent image information obtained by clamping the differentiated thermal-image information. That is, the improved thermal-image information may represent the thermal-image information about which the contour line of the object is displayed.

For example, an edge detection scheme may be determined based on whether another moving object or another object is present within a predetermined distance from the moving object to adjust a thickness of the contour line of the moving object. That is, when the thickness of the contour line of the moving object needs to be relatively larger based on surrounding information around the moving object, the prewitt operator performing a first derivative operation adding an absolute value to a result value in the X direction and the Y direction, may be used. Conversely, when the thickness of the contour line needs to be relatively smaller, the Laplacian operator performing the secondary derivative operation not adding the absolute value may be used.

An operation according to an embodiment of the present disclosure may be performed using a computer-readable program or code on a computer-readable recording medium. The computer-readable recording medium includes all kinds of recording devices for storing data that may be read by a computer system. The computer-readable recording medium may also be distributed over network-coupled computer systems so that the computer-readable program or code may be stored and executed in a distributed fashion.

When the embodiment is implemented in software, the above-described function may be implemented using a module (process, function, etc.) that performs the above-described function. The module may be stored in the memory and executed by the processor. The memory may be internal in or external to the processor and may be connected to the processor by various well-known means.

The computer-readable recording medium may include a hardware device such as a ROM, a RAM, a flash memory, or the like, specially configured to store therein and perform a program instruction. The program instructions may include machine code, such as those made by a compiler, as well as high-level language code that may be executed by a computer using an interpreter or the like.

While some aspects of the present disclosure have been described in the context of an apparatus, the description may also set forth descriptions about a corresponding method, where the block or apparatus corresponds to a method step or a feature of the method step. Similarly, the aspects as described in the context of a method may also include corresponding blocks or items or features of a corresponding apparatus. Some or all of the method steps may be performed by (or using) a hardware device such as, for example, a microprocessor, a programmable computer, or an electronic circuit. In some embodiments, one or more of the most important method steps may be performed by such an apparatus.

In embodiments, a programmable logic device (e.g. a field programmable gate array) may be used to perform some or all of the functionality of the methods described herein. In embodiments, the field programmable gate array may work with a microprocessor for performing one of the methods described herein. Generally, the methods are preferably performed by any hardware device.

Although the present disclosure has been described above with reference to a preferred embodiment of the present disclosure, those skilled in the art will appreciate that various modifications and changes may be made to the present disclosure without departing from the scope of the present disclosure as set forth in the following patent claims.

## Claims

1. A method for monitoring a thermal-image of a moving object, the method being performed by an electronic device having at least one optical camera (111), a speed dome camera (121), and a thermal imaging camera (122), the method comprising:
acquiring (S510) first image information from the at least one optical camera;
deriving (S520) a moving body in the first image information;
generating (S530) position information of the moving object based on the information about the moving object;
controlling (S540) movement of the speed dome camera so that the speed dome camera faces the moving object based on the position information of the moving object;
acquiring (S550) second image information about the moving object from the speed dome camera;
acquiring (S560) thermal-image information about the moving object from the thermal-image camera mounted on one side of the speed dome camera;
acquiring (S570) improved thermal-image information based on the thermal-image information and the second image information;
acquiring (S580) a temperature of the moving object based on the improved thermal-image information; and
determining (S590) whether the speed dome camera is to track and image the moving object based on the temperature of the moving object.

2. The method for monitoring the thermal-image of the moving object of claim 1, wherein the acquiring of the improved thermal-image information based on the thermal-image information and the second image information includes:
generating contour image information of the moving object using edge detection from the second image information; and
acquiring the improved thermal-image information based on the thermal-image information and the contour image information.

3. The method for monitoring the thermal-image of the moving object of claim 1, wherein the determining of whether the speed dome camera is to track and image the moving object based on the temperature of the moving object includes:
determining a threshold temperature based on a pre-trained environment-based threshold temperature determination model, and environment information about an area corresponding to the first image information; and
determining whether the speed dome camera is to track and image the moving object, based on the threshold temperature and the temperature of the moving body.

4. The method for monitoring the thermal-image of the moving object of claim 1, wherein the first image information indicates image information obtained by imaging a preset road area,
wherein a second image information indicates image information obtained by imaging a partial area of the preset road area,
wherein the second image information has a higher magnification than a magnification of the first image information.

5. The method for monitoring the thermal-image of the moving object of claim 1, wherein the electronic device includes: a first electronic device on which the at least one optical camera is mounted; and a second electronic device on which the speed dome camera and the thermal imaging camera are mounted,
wherein the first electronic device is fixed,
wherein movement of the second electronic device is controlled based on the position information of the moving object.

## Patentansprüche

1. Verfahren zum Überwachen eines Wärmebilds eines sich bewegenden Objekts, wobei das Verfahren durch eine elektronische Vorrichtung durchgeführt wird, die mindestens eine optische Kamera (111), eine Geschwindigkeitskuppelkamera (121) und eine Wärmebildkamera aufweist, wobei das Verfahren Folgendes umfasst:
Erfassen (S510) erster Bildinformationen von der mindestens einen optischen Kamera; Ableiten (S520) eines sich bewegenden Körpers in den ersten Bildinformationen;
Erzeugen (S530) von Positionsinformationen des sich bewegenden Objekts basierend auf den Informationen über das sich bewegende Objekt;
Steuern (S540) der Bewegung der Geschwindigkeitskuppelkamera, so dass die Geschwindigkeitskuppelkamera dem sich bewegenden Objekt zugewandt ist, basierend auf den Positionsinformationen des sich bewegenden Objekts;
Erfassen (S550) von zweiten Bildinformationen über das sich bewegende Objekt von der Geschwindigkeitskuppelkamera;
Erfassen (S560) von Wärmebildinformationen über das sich bewegende Objekt von der Wärmebildkamera, die auf einer Seite der Geschwindigkeitskuppelkamera montiert ist;
Erfassen (S570) von verbesserten Wärmebildinformationen basierend auf den Wärmebildinformationen und den zweiten Bildinformationen;
Erfassen (S580) einer Temperatur des sich bewegenden Objekts basierend auf den verbesserten Wärmebildinformationen; und
Bestimmen (S590), ob die Geschwindigkeitskuppelkamera das sich bewegende Objekt basierend auf der Temperatur des sich bewegenden Objekts verfolgen und abbilden soll.

2. Verfahren zum Überwachen des Wärmebilds des sich bewegenden Objekts nach Anspruch 1, wobei das Erfassen der verbesserten Wärmebildinformationen basierend auf den Wärmebildinformationen und den zweiten Bildinformationen Folgendes enthält:
Erzeugen von Konturbildinformationen des sich bewegenden Objekts unter Verwendung von Kantendetektion aus den zweiten Bildinformationen; und
Erfassen der verbesserten Wärmebildinformationen basierend auf den Wärmebildinformationen und den Konturbildinformationen.

3. Verfahren zum Überwachen des Wärmebilds des sich bewegenden Objekts nach Anspruch 1, wobei das Bestimmen, ob die Geschwindigkeitskuppelkamera das sich bewegende Objekt basierend auf der Temperatur des sich bewegenden Objekts verfolgen und abbilden soll, Folgendes enthält:
Bestimmen einer Schwellentemperatur basierend auf einem vortrainierten umgebungsbasierten Schwellentemperaturbestimmungsmodell und
Umgebungsinformationen über einen Bereich, der den ersten Bildinformationen entspricht; und
Bestimmen, ob die Geschwindigkeitskuppelkamera das sich bewegende Objekt basierend auf der Schwellentemperatur und der Temperatur des sich bewegenden Körpers verfolgen und abbilden soll.

4. Verfahren zum Überwachen des Wärmebilds des sich bewegenden Objekts nach Anspruch 1, wobei die ersten Bildinformationen Bildinformationen angeben, die durch Abbilden eines voreingestellten Straßenbereichs erhalten werden,
wobei zweite Bildinformationen Bildinformationen angeben, die durch Abbilden eines Teilbereichs des voreingestellten Straßenbereichs erhalten werden,
wobei die zweiten Bildinformationen eine höhere Vergrößerung als eine Vergrößerung der ersten Bildinformationen aufweisen.

5. Verfahren zum Überwachen des Wärmebilds des sich bewegenden Objekts nach Anspruch 1, wobei die elektronische Vorrichtung Folgendes enthält: eine erste elektronische Vorrichtung, auf der die mindestens eine optische Kamera montiert ist; und eine zweite elektronische Vorrichtung, auf der die Geschwindigkeitskuppelkamera und die Wärmebildkamera montiert sind,
wobei die erste elektronische Vorrichtung fixiert ist,
wobei die Bewegung der zweiten elektronischen Vorrichtung basierend auf den Positionsinformationen des sich bewegenden Objekts gesteuert wird.

## Revendications

1. Procédé de surveillance d'une image thermique d'un objet en mouvement, le procédé étant mis en œuvre par un dispositif électronique comportant au moins une caméra optique (111), une caméra dôme rapide (121) et une caméra thermique, le procédé comprenant :
l'acquisition (S510) des premières informations d'image à partir de la au moins une caméra optique ;
dériver (S520) un corps en mouvement dans les premières informations d'image ;
générer (S530) des informations de position de l'objet en mouvement sur la base des informations concernant l'objet en mouvement ;
contrôler (S540) le mouvement de la caméra dôme rapide de manière à ce que la caméra dôme rapide soit orientée vers l'objet en mouvement sur la base des informations de position de l'objet en mouvement ;
acquérir (S550) des secondes informations d'image concernant l'objet en mouvement à partir de la caméra dôme rapide ;
acquérir (S560) des informations d'image thermique sur l'objet en mouvement à partir de la caméra thermique montée sur un côté de la caméra dôme rapide ;
acquérir (S570) améliorer les informations d'image thermique sur la base des informations d'image thermique et des informations d'image secondaires ;
acquisition (S580) d'une température de l'objet en mouvement sur la base des informations d'image thermique améliorées ; et
déterminer (S590) si la caméra dôme rapide doit suivre et filmer l'objet en mouvement sur la base de la température de l'objet en mouvement.

2. Procédé de surveillance de l'image thermique de l'objet en mouvement selon la revendication 1, dans lequel l'acquisition des informations d'image thermique améliorées sur la base des informations d'image thermique et des informations de deuxième image comprend :
générer des informations d'image de contour de l'objet en mouvement à l'aide de la détection des contours à partir des informations d'image secondaires ; et
l'acquisition des informations d'image thermique améliorées sur la base des informations d'image thermique et des informations d'image de contour.

3. Procédé de surveillance de l'image thermique de l'objet en mouvement selon la revendication 1, dans lequel la détermination de la nécessité pour la caméra dôme rapide de suivre et d'imager l'objet en mouvement sur la base de la température de l'objet en mouvement comprend :
la détermination d'une température seuil sur la base d'un modèle de détermination de température seuil pré-entraîné basé sur l'environnement, et d'informations environnementales concernant une zone correspondant aux premières informations d'image ; et
déterminer si la caméra dôme rapide doit suivre et filmer l'objet en mouvement, sur la base de la température seuil et de la température du corps en mouvement.

4. Procédé de surveillance de l'image thermique de l'objet en mouvement selon la revendication 1, dans lequel les premières informations d'image indiquent des informations d'image obtenues en capturant une zone routière prédéfinie,
dans lequel une deuxième information d'image indique une information d'image obtenue en filmant une zone partielle de la zone routière prédéfinie,
dans lequel les deuxièmes informations d'image ont un grossissement supérieur au grossissement des premières informations d'image.

5. Procédé de surveillance de l'image thermique de l'objet en mouvement selon la revendication 1, dans lequel le dispositif électronique comprend : un premier dispositif électronique sur lequel est montée au moins une caméra optique ; et un deuxième dispositif électronique sur lequel sont montées la caméra dôme rapide et la caméra thermique,
dans lequel le premier dispositif électronique est fixe,
dans lequel le mouvement du deuxième dispositif électronique est contrôlé sur la base des informations de position de l'objet en mouvement.
